Europäisches Patentamt

(19) European Patent Office

Office européen des brevets

(11) Publication number: **0 285 226 B1**

(12) **EUROPEAN PATENT SPECIFICATION**

(45) Date of publication of patent specification :
27.03.91 Bulletin 91/13

(51) Int. Cl.⁵ : **B07B 13/04,** B07B 13/07,
A01D 17/06

(21) Application number : 88200606.7

(22) Date of filing : 30.03.88

(54) Grading apparatus for agricultural, horticultural and other articles.

(30) Priority : 31.03.87 NL 8700761

(43) Date of publication of application :
05.10.88 Bulletin 88/40

(45) Publication of the grant of the patent :
27.03.91 Bulletin 91/13

(84) Designated Contracting States :
BE DE ES FR GB GR IT NL

(56) References cited :
FR-E- 48 944
GB-A- 374 897
GB-A- 1 511 549
GB-A- 2 138 708
NL-A- 7 412 616
NL-C- 64 806

(73) Proprietor : **TS Agro Products Im-Export B.V.**
**Postbus 263**
**NL-3340 AG Hendrik Ido Ambacht (NL)**

(72) Inventor : **Meester, Jacobus**
**Meilag 4**
**NL-1619 XX Andijk (NL)**

(74) Representative : **den Boer, Jan Johannes, Ir. et**
**al**
**Octrooibureau Polak & Charlouis Laan Copes**
**van Cattenburch 80**
**NL-2585 GD The Hague (NL)**

EP 0 285 226 B1

## Description

The invention relates to a grading apparatus for agricultural, horticultural and other articles, comprising at least one pair of cooperating, parallel and horizontal rolls, portions of the circumferential surface thereof having a fixed radial distance to the roll axis, grooves being provided in the circumferential roll surface, the grooves being mutually parallel and spaced in the longitudinal direction of the rolls, the rolls of a roll pair being adapted to be rotated at the same speed in opposite directions and with the portions located at the fixed radial distance opposite to each other, such that the circumferential surfaces move apart at the upper ends of the pair.

Apparatus of this type are known from NL-A-7412616. Therein the grooves form part of a continuous helix extending along the full length of the roll. In this apparatus an article which has been taken by the cooperating rolls of a pair to the location of a grading aperture between said rolls and is too large for passing through said aperture, will remain between said rolls and has to be taken along the full helix towards the roll ends, where it is passed over to a next pair of rolls having a larger grading aperture. This causes considerable danger of damage to the articles. Moreover, such article blocks the passing of other articles having the correct, smaller size, so that also smaller articles following the first mentioned article and which could pass the aperture if this was not blocked, have to move further along the lenght of the rolls.

Therefore this known apparatus has the disadvantage that its grading action is not sufficiently rapid and/or the apparatus requires too large a grading surface for a predetermined capacity per unit of time. Smaller sizes of the articles may be clamped between larger sizes which may damage them and whereby the grading effect is inaccurate in that smaller size articles pass through a larger aperture while clamped in between larger size articles.

The invention aims at removing said disadvantages and providing a grading apparatus which is universally applicable for all kinds of articles.

This is achieved according to the invention in that the bottoms of said grooves and part of the circumferential surface therebetween constitute the portions having the fixed radial distance to the roll axis, at least one remaining part of the circumferential surface between the grooves having a similar distance to the roll axis, this part including guiding strips extending obliquely from the top of the part downwards and extending each substantially through the extent of one or more grooves in the longitudinal direction of the roll and end at their lower end at a roll portion, having the fixed distance, one or more further pairs of rolls being provided as a continuation of a pair of rolls, the size of the passing aperture of the grooves being larger in each further pair of rolls when going in the direction in which the guiding strips transport the articles.

The articles pass through the apertures which are formed each time when the portions of a pair of rolls having the fixed radial distance are mutually opposite, unless the dimensions of the articles are too large therefore. In that case the article remains supported over the aperture by the rolls until the roll portions at smaller radial distance become situated opposite to each other. Then the article is guided by the guiding strips further along the length of the roll. Since the guiding elements extend obliquely from the top downwards and since the mutually facing surfaces move upwardly, the articles move substantially horizontally forward in the longitudinal direction of the roll, in the direction towards the next pair of rolls having larger grading apertures until they are permitted to pass downwardly through said apertures.

Each pair of rolls or each roll section preferably comprises a number of longitudinally subsequent grooves having equal passing aperture, so that the articles as supplied may spread along the length of the rolls and more articles are permitted to pass through the passing apertures.

It is to be noted that GB-A-511, 549 shows a similar apparatus, which has fingers projecting in the grooves. However, said fingers serve for removing products which block the groove, sideways from the apparatus. The fingers do not move products in the longitudinal direction of the rolls whereby they may reach larger sized grooves passing said products.

Preferably the guiding strips extend each continuously from a cylindrical roll portion and obliquely downwards to a next cylindrical roll portion as seen in the longitudinal direction of the roll and continuously merge therewith.

In a predetermined embodiment a guiding strip is a plate having substantially the shape of a circle segment, the chordal side of which being secured to the surface extending at the smaller distance.

In order to prevent the articles from jumping away laterally and when more than one pair of rolls are mounted adjacent to each other in the transverse direction, a penthouse roof shaped cover plate may be provided over said rolls, bridging the transverse spacing between the axes of adjacent rolls of next pairs, whereby the articles cannot enter between two not cooperating rolls. For a smooth adaptation to the roll contour and in order to prevent damage to the articles therewith resilient cover elements may be provided to the lower edges of the cover plate corresponding to the longitudinal profile-shape of a roll, said cover element being e. g. formed by brushes.

The cross-section of the grooves is adapted to the shape of the article, e. g. elongate for haricot or red kidney beans and for potatoes rectangular such that square passing apertures are obtained.

The invention will hereunder be further explained with reference to the drawing in which an embodiment as an example of the grading apparatus according to the invention is schematically shown.

Fig. 1 shows a perspective view of a pair of rolls.

Fig. 2 is a side view of a roll, as seen on the flattened plane thereof.

Fig. 3 shows two adjacent pairs of rolls with cover plates mounted above them.

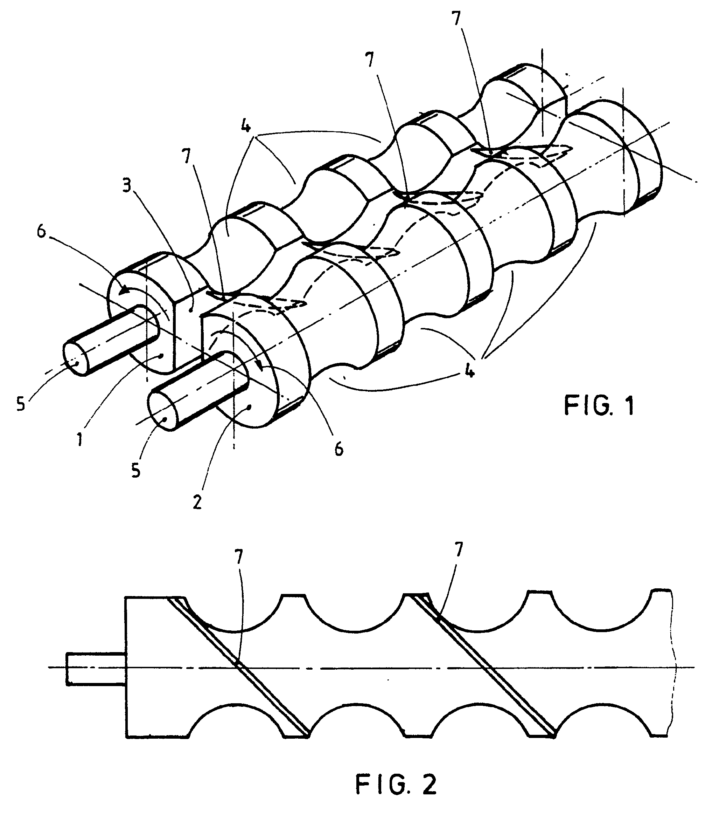

Fig. 1 shows a single pair of cooperating grading rolls 1, 2. The shape from which the rolls are developed is a cylinder, which is provided with plane surfaces 3 extending along a chordal plane. Furthermore a number of circumscribing grooves 4, in the embodiment shown four, have been provided in each roll successively in the longitudinal direction of the roll. The shape of the cross-section of said grooves should be adapted to the article to be graded. In the embodiment shown this shape is substantially a half circle. The rolls 1, 2 are drivable by any suitable means through stubs 5, such that the cylinders at their upper sides rotate in opposite directions according to the arrows 6 and with equal rotational velocity. It will be clear that therewith an aperture is formed when the cylindrical portions remaining between the grooves 4 are opposite to eachother, the spacing between the roll axes 5 being such that said cylindrical surfaces engage or substantially engage eachother, the aperture being formed between both cooperating rolls at the position of the grooves 4. If now articles are supplied in the longitudinal direction of the rolls at their upper sides, e. g. by means of a chute (not shown), said articles will drop onto the rolls. If the article dimensions are such that it may pass through the aperture formed by two cooperating grooves, the article drops and is discharged in a container or onto a conveyor transporting this size to a predetermined collecting place.

In the embodiment shown the rolls have four equally large grooves successively in the longitudinal direction of the rolls.

Guiding elements 7 have been secured to the flattened planes 3 of the rolls and extending in transverse direction from said planes, extending obliquely from their tops downwards, as seen in the longitudinal direction of the rolls or the transport direction of the articles. Said elements generally have a curved edge, e. g. the element may be a small plate in the shape of a circle segment. If in the position of the rolls according to figure 1, that is with the flattened planes situated oppositely to eachother, an article tends to drop between the rolls under the influence of gravity, it is hindered thereby by the guiding elements, which, moreover, move upwardly. The products are moved along in the direction of transport by the oblique position of the elements, that is from front to back, as seen in figure 1. A product which has not succeeded in passing the aperture of the first groove, still has this chance with the subsequent three grooves. However, when its size is too large for the aperture it gets onto a next pair of rolls, which is not shown in figure 1, but which extend with their axes in continuation of the rolls 1, 2. Said rolls also have e. g. four grooves having a larger size so that they form larger passing apertures. Dependent on the existing sizes of the article, a number of series of cooperating rolls may be placed one behind the other.

It appears from figure 2 that the guiding elements extend from substantially the cylindrical portion before a groove 4, along the flattened plane 3 downwardly up till on the next cylindrical portion, preceding the next groove 4. The slant of the guiding element 7 relative to the roll axis in any case depends on the rotational velocity of the rolls and also on the article weight. The shape of the guiding elements, which also may comprise a rod or tube shaped edge secured to the plane 3, in correspondence with the circular arc edge of the element shown, should be such that the operation of two guiding elements 7 facing eachother on both rolls is such that more or less the cylindrical surface of the rolls is continued thereby, the articles will not be damaged and they also will not be thrown away laterally from the top of the rolls, that is to the outer side of the rolls, opposite to the flattened planes 3, as seen in figure 1.

The shape of the apertures generated between the rolls in the grooves is adapted to the shape of the articles to be graded, e. g. round for flower bulbs, onions, cabbage products, apples and similar articles. For haricot beans or red kidney beans this shape should be elongate with the longer side extending in the direction of the roll axis. Similar considerations apply to potatoes, wherein the groove in a roll may have a rectangular cross-section with the longer side extending in the direction of the axis and wherein the cooperating grooves form a square passing aperture.

In order to give an idea 50 to 60 revolutions per minute may be stated as the rotational velocity for the rolls and a dimension of 20 to 300 mm for the cylinder diameter of the rolls.

With large apertures for large articles it will be necessary to have the guiding element extend substantially S-shaped instead of according to a straight line as shown in fig. 2, in order to prevent that the guiding element makes as it were the grooves more shallow, whereby the articles would be thrown out laterally. Thereto the guiding elements should in any case continue up to the cylindrical portion at the lower end of fig. 2, in order to prevent that the articles are thrown out laterally by the cylindrical intermediate portions.

Since the first pair of rolls or the first rolls section should offer the smallest passing apertures and the next sections should have larger apertures, the subsequent sections could have less grooves per roll, or the roll could be of greater length. The first measure presumably is to be preferred because with the next sections already less articles are to be graded because already part thereof have passed the previous rolls.

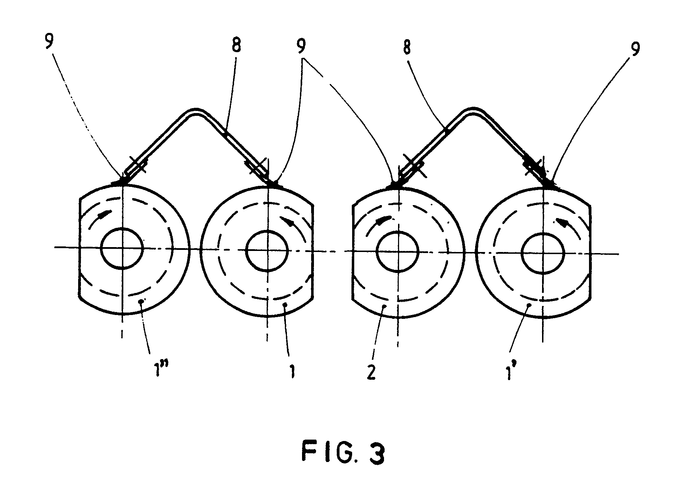

The lateral throw is further prevented by providing limiting or cover plates over each roll of a pair (see figure 3), at both sides of the middle pair of rolls a further pair of rolls having been provided, of which only one roll has been shown. In order to prevent that therewith articles get between two rolls of different pairs and then will be damaged because said rolls rotate towards eachother it is preferable to position a penthouse roof shaped cover plate 8 over said space between two not cooperating rolls, said plates also preventing the lateral throw. In order to prevent further damage to the articles, the lower edges of the cover plates may be formed by resilient elements, e. g. in the shape of brushes 9 or of resilient strips, extending from the lower edge.

Due to the slant of the guiding elements large and therefore heavier articles move forwardly with greater velocity so that small article sizes which might be clamped between the large sizes stay behind and are being also graded afterwards.

It is possible to increase the grading capacity by providing more than one flattened plane instead of a single flattened plane on the rolls.

In figure 1 only guiding elements for the roll 1 have been drawn. Similar elements and secured in corresponding manner to the flattened plane 3 of the roll 2, such that in the position according to figure 1 with the flattened planes vertical, said elements are accurately opposite to eachother, have not been shown. With a larger roll diameter the effect of lateral throw will be smaller.

Contrary to e.g. vibrating sieves the grading apparatus according to the invention operates noiseless and without shocks.

It may be envisaged to mount the roll sections interchangeable in the grading apparatus so that when a transfer is made to a different article to be graded, different rolls may be mounted.

## Claims

1. Grading apparatus for agricultural, horticultural and other articles, comprising at least one pair of cooperating, parallel and horizontal rolls, portions of the circumferential surface thereof having a fixed radial distance to the roll axis, grooves being provided in the circumferential roll surface, the grooves being mutually parallel and spaced in the longitudinal direction of the rolls, the rolls of a roll pair being adapted to be rotated at the same speed in opposite directions and with the portions located at the fixed radial distance opposite to each other, such that the circumferential surfaces move apart at the upper ends of the pair, characterized in that the bottoms of said grooves (4) and part of the circumferential surface therebetween constitute the portions having the fixed radial distance to the roll axis, at least one remaining part (3, 7) of the circumferential surface between the grooves (4) having a similar distance to the roll axis, this part including guiding strips (7) extending obliquely from the top of the part downwards and extending each substantially through the extent of one or more grooves in the longitudinal direction of the roll and end at their lower end at a roll portion, having the fixed distance, one or more further pairs of rolls (1, 2) being provided as a continuation of a pair of rolls, the size of the passing aperture of the grooves (4) being larger in each further pair of rolls when going in the direction in which the guiding strips (7) transport the articles.

2. Apparatus according to claim 1, characterized in that the guiding strips (7) extend each continuously from a cylindrical roll portion and obliquely downwards to a next cylindrical roll portion, as seen in the longitudinal direction of the roll (1, 2) and continuously merge therewith.

3. Apparatus according to claim 2, characterized in that a guiding strip is a plate (7) having substantially the shape of a circle segment, the chordal side of which being secured to the surface (3) extending at the smaller radial distance.

4. Apparatus according to one of the preceding claims, characterized in that a penthouse roof shaped cover plate (8) is provided over the rolls (1, 2), bridging the transverse spacing between the axes of adjacent rolls of successive pairs.

5. Apparatus according to claim 4, characterized in that resilient cover elements (9) are provided to the lower edges of the cover plate (8) corresponding to the longitudinal contour of a roll (1, 2), said cover elements being e. g. formed by brushes.

6. Apparatus according to one or more of the preceding claims, characterized in that for grading red kidney beans or haricot beans the cross-section of the groove in a plane through the cylinder axis is elongate.

7. Apparatus according to one or more of the preceding claims, characterized in that for grading potatoes the cross-section of the groove in a plane through the cylinder axis is rectangular.

## Ansprüche

1. Sortiervorrichtung für Produkte aus der Landwirtschaft, aus dem Garten oder dergleichen, versehen mit mindestens einem Paar zusammenarbeitender, parallel zueinander angeordneter, waagerechter Walzen, wobei Teile der Umfangsfläche der letzteren einen gleichbleibenden Abstand zur Walzenachse aufweisen und Rillen in der Walzen-Umfangsfläche vorgesehen sind, die – in der Längsrichtung gesehen – im Abstand und parallel zueinander angeordnet sind, und wobei die Walzen eines Walzenpaares – mit den im gleichbleibenden Abstand liegenden Teilen gegenübereinander liegend – mit gleicher Geschwindigkeit in entgegengesetzten Richtungen antreibbar sind, in der Weise, dass die Umfangsflächen an der oberen Seite des Paares auseinander bewegen, dadurch gekennzeichnet, dass die Bodenflächen der Rillen (4) und ein Teil der Umfangsfläche dazwischen die Teile bilden, welche den gleichbleibenden Abstand zur Walzenachse aufweisen, wobei wenigstens ein übrig bleibender Teil (3, 7) der Umfangsfläche zwischen den Rillen (4) einen entsprechenden Abstand zur Walzenachse aufweisen, welcher Teil Fürungsstreifen (7) aufweist, die von der Spitze des Teils schräg nach unten verlaufen und sich, in der Längsrichtung der Rolle gesehen, sich je etwa über eine oder mehrere Rollen erstrecken und an ihren unteren Enden bei einem Walzenteil mit den gleichbleibenden Abstand enden, wobei ein weiteres Rollenpaar oder mehrere weiteren Rollenpaare (1, 2) in Verlängerung eines Rollenpaares vorgesehen sind, und wobei die Grösse der Durchlassöffnung der Rillen (4), betrachtet in der Richtung in der die Fürungsstreifen (7) die Produkte fördern, in jedem weiteren Rollenpaar grösser ist.

2. Vorrichtung nach Anspruch 1, dadurch gekennzeichnet, dass die Führungsstreifen (7), in der Längsrichtung der Walze (1, 2) gesehen, je kontinuierlich von einem zylindrischen Walzenteil schräg nach unten bis einem nächsten zylindrischen Walzenteil verlaufen und kontinuierlich in denselben auslaufen.

3. Vorrichtung nach Anspruch 2, dadurch gekennzeichnet, dass ein Fürungsstreifen eine Platte (7) in etwa dem Gestalt eines Kreissegments ist, dessen Sehneseite an der Oberfläche (3) mit dem kleineren Radius befestigt ist.

4. Vorrichtung nach einem der vorangehenden Ansprüche, dadurch gekennzeichnet, dass eine dachförmig gestaltete Deckplatte (8) über den Walzen (1, 2) vorgesehen ist, die den Querabstand zwischen den Achsen der angrenzenden Walzen der benachbarten Paare überbrückt.

5. Vorrichtung nach Anspruch 4, dadurch gekennzeichnet, dass an den unteren Rändern der Deckplatte (8), biegsame Deckelemente (9), zum Beispiel in Form einer Bürste, vorgesehen sind, die dem Längsprofil einer Walze (1, 2) geformt sind.

6. Vorrichtung nach einem der vorangehenden Ansprüche, dadurch gekennzeichnet, dass der Rillenquerschnitt in einer Ebene durch die Zylinderachse, zum Sortieren von braunen oder weissen Bohnen, länglich gestaltet ist.

7. Vorrichtung nach einem der vorangehenden Ansprüche, dadurch gekennzeichnet, dass der Rillenquerschnitt in einer Ebene durch die Zylinderachse quadratisch gestaltet ist zum Sortieren von Kartoffeln.

**Revendications**

1. Appareil de calibrage pour des articles agricoles, horticoles et autres articles, comprenant au moins une paire de rouleaux horizontaux et parallèles coopérant, des parties de leur surface circonférentielle ayant une distance radiale fixe par rapport à l'axe du rouleau, des rainures étant prévues dans la surface de rouleau circonférentielle, les rainures étant mutuellement parallèles et espacées dans la direction longitudinale des rouleaux, les rouleaux d'une paire de rouleaux étant aptes à être entraînés en rotation à la même vitesse dans les directions opposées et avec les parties localisées à la distance radiale fixe opposées l'une par rapport à l'autre, de sorte que les surfaces circonférentielles s'éloignent aux extrémités supérieures de la paire, caractérisé en ce que les fonds desdites rainures (4) et la partie de la surface circonférentielle entre, constituent les parties ayant la distance fixe radiale par rapport à l'axe du rouleau, au moins une partie subsistant (3, 7) de la surface circonférentielle entre les rainures (4) ayant une distance similaire par rapport à l'axe du rouleau, cette partie incluant des bandes de guidage (7) s'étendant obliquement à partir du haut de la partie vers le bas et s'étendant chacune sensiblement à travers l'extension de l'une ou de plusieurs rainures dans la direction longitudinale du rouleau et se terminant à leur extrémité inférieure en une partie de rouleau, ayant la distance fixe, une ou plusieurs autres paires de rouleau (1, 2) étant prévues comme une continuation d'une paire de rouleaux, la taille de l'ouverture de passage des rainures (4) étant plus grande dans chaque autre paire de rouleaux lorsqu'allant dans la direction dans laquelle les bandes de guidage (7) transportent les articles.

2. Appareil selon la revendication 1, caractérisé en ce que les bandes de guidage (7) s'étendent chacune de façon continue à partir d'une partie de rouleau cylindrique et obliquement vers le bas vers une partie de rouleau cylindrique suivante, lorsque vues dans la direction longitudinale du rouleau (1, 2) et se joignent avec continuité.

3. Appareil selon la revendication 2, caractérisé en ce qu'une bande de guidage est une plaque (7) ayant sensiblement la forme d'un segment de cercle, dont le côté suivant la corde est fixé à la surface (3) s'étendant à la plus petite distance radiale.

4. Appareil selon l'une quelconque des revendications précédentes, caractérisé en ce qu'une plaque formant couvercle en forme de toit à une pente (B) est prévue sur les rouleaux (1, 2) formant un pont sur l'espace transversal entre les axes de rouleaux voisins de paires successives.

5. Appareil selon la revendication 4, caractérisé en ce que des éléments formant couvercle élastiques (9) sont prévus sur les bords inférieurs de la plaque formant couvercle (B) correspondant au contour longitudinal d'un rouleau (1, 2), lesdits éléments formant couvercle étant, par exemple, formés par des brosses.

6. Appareil selon l'une quelconque des revendications précédentes, caractérisé en ce que pour le calibrage des haricots rouges ou haricots blancs, la section transversale de la rainure dans un plan à travers l'axe du cylindre est allongée.

7. Appareil selon l'une quelconque des revendications précédentes, caractérisé en ce que pour le calibrage des pommes de terre, la coupe transversale de la rainure dans un plan à travers l'axe du cylindre est rectangulaire.

FIG. 1

FIG. 2

FIG. 3